# DEMANDE DE BREVET EUROPEEN

(11) **EP 2 669 855 A1**
(43) Date de publication de la demande: **04.12.2013**
(21) Numéro de dépôt: 13169305.3
(22) Date de dépôt: 27.05.2013
(51) Int. Cl.: G06Q 10/04, G06Q 50/06, B60L 11/18

(54) **Procédé d'optimisation de la distribution d'une ressource**

(30) Priorité: 29.05.2012 FR 1254924
(71) Demandeur: Schneider Electric Industries SAS, 92500 Rueil-Malmaison (FR)
(72) Inventeur: Chansavang, Albert, 38050 Grenoble Cedex 9 (FR)
(74) Mandataire: Ilgart, Jean-Christophe

(57) **Abrégé**

L'invention concerne un procédé d'optimisation de la distribution d'une ressource à au moins une entité réceptrice de ladite ressource pendant une période donnée, comportant les étapes suivantes:
- évaluer la ressource totale disponible et les demandes de ladite ressource pendant la période de distribution donnée,
- fixer un objectif d'optimisation de qualité et/ou de coût à atteindre pendant ladite période de distribution,
- découper la période de distribution en une succession de fenêtres temporelles,
- définir un ordre de priorité entre les demandes,
- définir un ordre de priorité entre les fenêtres temporelles,
- construire un profil de distribution en fonction de la variation du niveau de la ressource disponible au cours de la période de distribution fixée,
- autoriser la distribution de la ressource disponible selon l'ordre de priorité défini seulement si le profil de distribution défini permet de satisfaire toutes les demandes.

## Description

### DOMAINE TECHNIQUE

L'invention se situe dans le domaine de l'optimisation de la gestion et de la distribution d'une ressource limitée à fournir à une ou plusieurs entités pendant une période de distribution donnée.

L'invention s'applique plus particulièrement, mais non exclusivement, à la distribution d'énergie électrique à une ou plusieurs entités consommatrices d'énergie telles que par exemple des véhicules électriques et/ou hybrides.

L'invention concerne également un dispositif comportant des moyens pour mettre en oeuvre le procédé selon l'invention et un programme d'ordinateur enregistré sur un support et comportant des instructions pour mettre en oeuvre le procédé selon l'invention.

### ÉTAT DE LA TECHNIQUE ANTÉRIEURE

Les solutions de l'art antérieur connu pour distribuer une ressource à une ou à plusieurs entités s'appuient soit sur une stratégie dite « Premier arrivé premier servi » qui consiste à allouer toute la ressource disponible, dès que celle-ci est demandée, à la première entité ayant fait la demande soit sur une stratégie dite du «best-effort» qui se fonde sur une hiérarchisation des demandes selon plusieurs niveaux de priorité qui dépendent du type de contrat de chaque entité.

L'inconvénient de la première approche est de favoriser les premiers demandeurs au détriment des suivants, tandis que dans la deuxième approche, la ressource est répartie entre toutes les entités en fonction des disponibilités courantes, sans prendre d'engagement sur la quantité de la ressource fournie pendant la période de distribution.

Ce type de problème se pose aussi bien dans la gestion des allocations d'énergie électrique à un ou plusieurs appareils que dans la gestion de la répartition de ressources de calcul d'un système d'exploitation informatique entre plusieurs processeurs, ou encore dans une procédure de répartition d'une bande de fréquence entre plusieurs émetteurs dans un systèmes de télécommunication. Dans toutes ces applications, chaque situation appelle une planification spécifique différente d'un cas à un autre.

Un but de l'invention est de réaliser une planification qui prend en compte dynamiquement des contraintes différentes dépendant de contextes différents afin de permettre une distribution optimale de la ressource.

Plus particulièrement, le but de l'invention est d'assurer une distribution de la ressource qui prend en compte un objectif (par exemple de qualité de service et/ou de coût du service) fixé par le fournisseur de la ressource, la variation de la quantité de la ressource disponible pendant la période de distribution de cette ressource, des variations instantanées de la demande pendant ladite période, ainsi que des contraintes spécifiques à chaque entité réceptrice de ladite ressource.

### EXPOSÉ DE L'INVENTION

Le but de l'invention est atteint au moyen d'un procédé comportant une étape préalable consistant à évaluer la ressource totale disponible et les demandes de ladite ressource pendant la période de distribution de cette ressource.

Le procédé selon l'invention comporte en outre les étapes suivantes :
- découper la période de distribution en plusieurs sections équivalentes correspondant à des fenêtres temporelles unitaires au cours desquelles il existe des contraintes identiques pour optimiser la distribution de ladite ressource,
- analyser la disponibilité de la ressource, les variations du niveau de cette ressource, la demande globale de la ressource, et la variation de cette demande pendant chaque fenêtre temporelle;
- définir un ordre de priorité entre les demandes,
- définir un ordre de priorité entre les fenêtres temporelles,
- construire un profil de distribution en fonction de la variation du niveau de la ressource disponible au cours de ladite période de distribution,
- autoriser la distribution de la ressource disponible selon l'ordre de priorité défini si le profil de distribution défini permet de satisfaire toutes les demandes.

Le procédé selon l'invention s'appuie sur une meilleure communication entre une unité de gestion associée au système chargé de fournir la ressource à distribuer et les entités qui demandent ladite ressource.

La communication s'articule autour d'une phase d'évaluation qui permet de construire un schéma temporel de distribution de la ressource et d'une phase de pilotage qui permet de contrôler cette distribution sur la base dudit schéma temporel. Ces deux phases sont réalisées par l'unité de gestion.

Au cours de la phase d'évaluation, l'unité de gestion analyse la disponibilité de la ressource, les variations du niveau de cette ressource pendant chaque fenêtre temporelle, la demande globale de la ressource, et la variation de cette demande pendant chaque fenêtre temporelle. A partir de cette analyse, l'unité de gestion établit le schéma temporel de distribution et retourne une décision quant à la faisabilité de la distribution sur la base du schéma temporel établi. Si la demande est faisable et est confirmée, l'unité de gestion s'engage à fournir cette ressource sur la base schéma temporel établi. Sinon, elle propose des alternatives consistant, par exemple, à allouer la ressource demandée selon une nouvelle planification temporelle.

Une fois qu'un ensemble de demandes de la ressource est accepté, le système calcule pour chaque entité les profils d'allocation de ressource selon le schéma temporel établi. Ce calcul prend en compte des contraintes fortes (ressource totale disponible, limitation sur chaque source en cas de multiples sources, disponibilité temporelle, ...) et peut être ajusté pour optimiser un objectif à la fois tels que par exemple, finir la distribution de la ressource au plus tôt, ou démarrer la distribution au plus tard, ou encore minimiser le coût.

Selon une autre caractéristique de l'invention, les fenêtres temporelles obtenues par découpage de la période de distribution de la ressource sont définies en fonction du niveau courant de la ressource disponible et d'au moins un paramètre décrivant les besoins de chaque entité réceptrice.

Préférentiellement, le procédé selon l'invention comporte une étape consistant à modifier l'ordre de priorité entre les fenêtres temporelles et/ou le niveau de la ressource distribuée si le profil de distribution défini ne permet pas de satisfaire la demande sur la base du schéma temporel établi.

Le procédé selon l'invention s'applique pour optimiser la distribution d'énergie électrique de recharge d'au moins un véhicule électrique, ou pour optimiser la répartition d'une bande de fréquence entre plusieurs émetteurs radiofréquences, ou encore pour répartir une capacité de calcul entre des microprocesseurs dans un système informatique.

Dans l'application du procédé selon l'invention pour distribuer de l'énergie électrique de recharge à un ou à plusieurs véhicules électriques, la phase d'évaluation consiste à analyser les demandes d'énergie de chaque véhicule et la phase de pilotage consiste à calculer un profil d'allocation d'énergie pour chacun des véhicules. Ce calcul prend en compte des contraintes fortes (énergie totale disponible, limitation sur chaque borne de distribution et sur chaque véhicule, disponibilité temporelle, ...) et peut être ajusté pour optimiser l'un des objectifs consistant à finir de recharger le véhicule au plus tôt, démarrer la recharge au plus tard, ou minimiser le coût de la recharge, ou encore minimiser le niveau d'émission de Gaz Carbonique (CO2) produit par l'énergie électrique distribuée.

Dans cette application, la recharge d'une pluralité de véhicules électriques et/ou hybride au moyen d'une pluralité de stations de recharge pendant une période de distribution donnée comporte les étapes suivantes:
- évaluer l'énergie totale disponible et les demandes d'énergie pendant la période de distribution donnée,
- fixer un objectif d'optimisation de qualité et/ou de coût à atteindre pendant ladite période de distribution,
- découper la période de distribution en une succession de fenêtres temporelles,
- définir un ordre de priorité entre les demandes d'énergie,
- définir un ordre de priorité entre les fenêtres temporelles de manière à satisfaire l'objectif d'optimisation fixé,
- construire un profil de distribution d'énergie en fonction de la variation du niveau de l'énergie disponible au cours de la période de distribution,
- autoriser l'allocation d'énergie selon l'ordre de priorité défini seulement si le profil de distribution défini permet de satisfaire toutes les demandes.

Notons que l'objectif d'optimisation fixé peut consister à choisir une durée optimale de recharge pour chacun desdits véhicules et/ou un coût minimal de l'énergie distribuée à chaque véhicule et/ou un niveau minimal d'émission de Gaz Carbonique produit par l'énergie électrique distribuée.

Dans cette application, la demande de chaque véhicule est définie par les paramètres suivants :
○ energyToAllocateKWh, représentant l'énergie à allouer en [kW.h] ;
○ startTimeMin représentant, l'instant en [min] à partir duquel la charge est possible,
○ endTimeMin, représentant l'instant en [min] après lequel la charge n'est plus possible ;
○ minCurrentA, représentant la valeur minimale du courant en [A] qu'il est nécessaire d'allouer pour que le véhicule puisse se charger (seuil d'activation du chargeur) ;
○ maxCurrentA représentant, la valeur maximale du courant en [A] sous laquelle on peut charger le véhicule,

Et, la puissance électrique disponible et les données d'optimisation sont définies par les paramètres suivants :
○ availablePowerKW, représentant le profil de la puissance totale disponible sur la station de recharge en [kW] en fonction du temps ;
○ energeticalCost, représentant le profil du coût énergétique en fonction du temps ;
○ CO2Emissions, représentant le profil de l'indicateur d'émissions de CO2 équivalentes de l'énergie électrique produite en [gCO2eq / kW.h] en fonction du temps.

Le procédé selon l'invention est mis en oeuvre par un dispositif comportant :
- des moyens pour évaluer la ressource totale disponible et les demandes de ladite ressource pendant la période de distribution donnée,
- des moyens pour fixer un objectif d'optimisation de qualité et/ou de coût à atteindre pendant ladite période de distribution,
- des moyens pour découper la période de distribution en une succession de fenêtres temporelles,
- des moyens pour définir un ordre de priorité entre les demandes,
- des moyens pour définir un ordre de priorité entre les fenêtres temporelles de manière à satisfaire l'objectif d'optimisation fixé,
- des moyens pour construire un profil de distribution de la ressource en fonction de la variation du niveau de ladite ressource au cours de la période de distribution fixée,
- des moyens pour autoriser l'allocation de la ressource disponible selon l'ordre de priorité défini seulement si le profil de distribution défini permet de satisfaire toutes les demandes.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles:
- la figure 1 illustre schématiquement un exemple d'application du procédé selon l'invention pour distribuer de façon optimale de l'énergie électrique à plusieurs véhicules électriques et/ou hybrides de plusieurs bornes de recharge;
- la figure 2 illustre schématiquement une architecture générale d'un système de gestion de la recharge dans l'application de la figure 1,
- la figure 3 est un organigramme illustrant les étapes du procédé dans l'application de la figure 1,
- les figures 4 et 5 illustrent un exemple des variations du coût d'énergie pendant une durée de recharge et la discrétisation de ladite durée pour la mise en oeuvre du procédé dans le cas de la figure 1,
- la figure 6 est un organigramme illustrant la construction des profils d'allocation d'énergie dans l'application illustrée par les figures 4 à 5,
- la figure 7 est un organigramme illustrant l'étape d'allocation de ressources sur chaque section temporelle selon la figure 6,
- les figures 8 à 11 illustrent un exemple complet de construction des profils d'allocation au moyen du procédé selon l'invention.

### EXPOSÉ DÉTAILLÉ DE MODES DE RÉALISATION PARTICULIERS

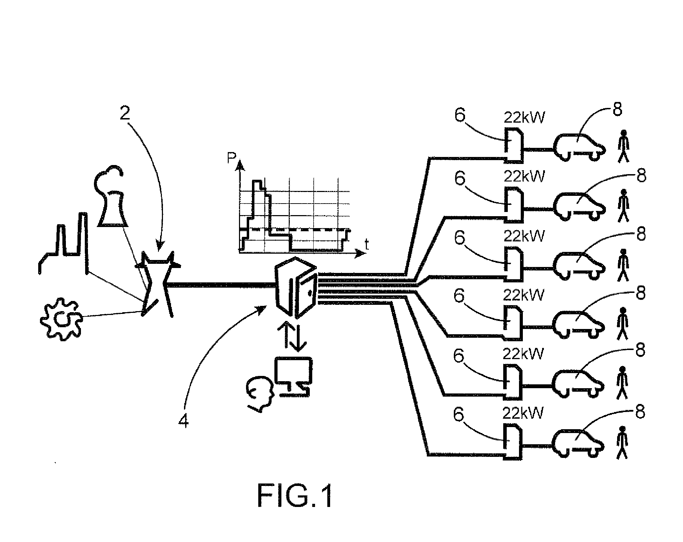

La description qui va suivre sera faite par référence à la figure 1, représentant schématiquement un système de distribution d'énergie électrique à des véhicules électriques et/ou hybrides, ledit système comportant une source d'énergie électrique 2 reliée, via une unité de gestion 4, à six bornes de recharge électriques 6 de 22kW par exemple. Si l'exploitant de ce système veut fournir la recharge à pleine puissance à chaque instant aux véhicules 8, il devra souscrire un contrat de 6x22 = 132kW. Ce maximum de puissance ne sera vraisemblablement atteint que ponctuellement. Les pics d'appel représentent un surcoût pour l'exploitant et peuvent également être problématiques pour le producteur d'énergie, qui pourrait être amené à investir dans des moyens de production supplémentaires pour absorber des pics ponctuels. Si le contrat souscrit est de puissance inférieure, ces pics d'appel peuvent même faire disjoncter l'installation, rendant indisponibles toutes les bornes de recharge.

Il est donc souhaitable de satisfaire aussi bien les besoins/demandes de recharge des véhicules 8 que les contraintes et objectifs de l'exploitant.

A cet effet, la solution selon l'invention s'articule autour de deux phases, soit une phase préalable d'analyse suivie d'une phase de pilotage des puissances de recharge.

La phase d'analyse consiste à indiquer les besoins de recharge à l'unité de gestion 4 qui évalue ces besoins à la lumière de l'énergie totale disponible, des contraintes de coût ainsi que des contraintes spécifiques à chaque véhicule.

Si la demande est faisable et est confirmée l'unité de gestion 4 s'engage alors sur l'allocation de l'énergie aux véhicules 8, sinon, elle propose des alternatives consistant, par exemple, à allouer l'énergie demandée mais en allongeant la durée de la recharge, ou à garder la durée de la recharge et allouer une quantité d'énergie inférieure.

La phase de pilotage des puissances de recharge consiste à calculer les profils d'allocation de ressource pour chacun des véhicules à recharger lorsqu'un ensemble de demandes de recharge est acceptée et que l'unité de gestion 4 s'est engagée sur sa réalisation.

Ce calcul prend en compte des contraintes fortes (puissance totale disponible, limitation sur chaque borne et véhicule, disponibilité temporelle, ...) et peut être ajusté pour optimiser, à titre d'exemple, un seul objectif parmi les objectifs consistant à, finir la recharge au plus tôt, démarrer la recharge au plus tard, minimiser le coût, ou encore minimiser l'empreinte de gaz carbonique (CO2).

Les profils d'allocation peuvent s'exprimer par une grandeur d'intensité en fonction du temps, soit de la puissance [kW] en fonction du temps, soit une intensité de courant en [A] en fonction du temps.

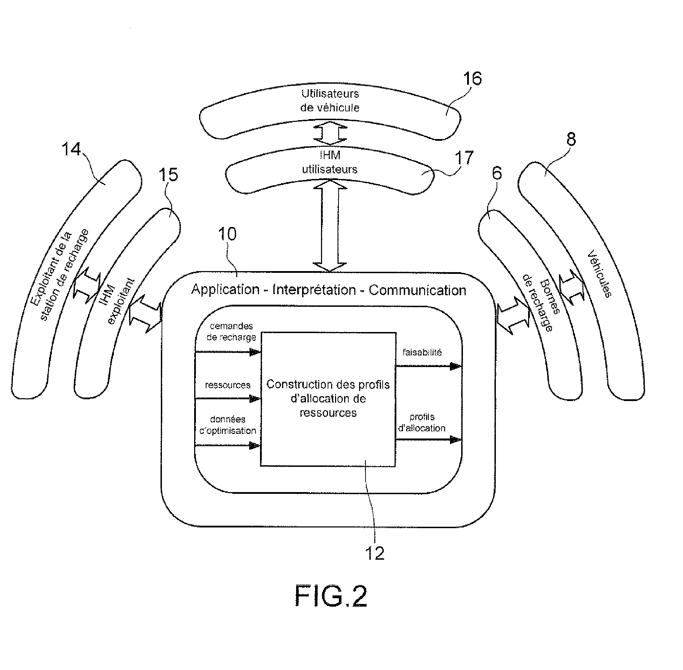

La figure 2 illustre schématiquement une architecture générale d'un système de gestion de la recharge dans l'application de la figure 1. Cette architecture comporte une couche passerelle 10 faisant office de gestion applicative, d'interprétation et de communication assurant l'interface avec les acteurs extérieurs (exploitant de la station, utilisateurs de véhicule, véhicules), un noyau central 12 chargé de la construction des profils d'allocation de ressources et communiquant avec l'exploitant 14 de la station de recharge via une interface IHM exploitant 15 , avec les utilisateurs 16 des véhicules 8 via une interface IHM utilisateur 17, et avec les véhicules 8 via les bornes de recharge 6.

Un ensemble de demandes de recharge peut s'exprimer sous la forme d'un objet Tasks avec les paramètres suivants :
○ energyToAllocateKWh: l'énergie à allouer en [kW.h] ;
○ startTimeMin: l'instant en [min] à partir duquel la charge est possible ;
○ endTimeMin: l'instant en [min] après lequel la charge n'est plus possible ;
○ minCurrentA: la valeur minimale du courant en [A] qu'il est nécessaire d'allouer pour que le véhicule puisse se charger (seuil d'activation du chargeur) ;
○ maxCurrentA: la valeur maximale du courant en [A] sous lequel on peut charger véhicule (limite de la borne de recharge, du câble de recharge ou du chargeur du véhicule);

Notons que chacun de ces paramètres est défini pour chaque véhicule à recharger.

Par ailleurs, la puissance disponible et les données d'optimisation sont exprimées de la manière suivante:
○ availablePowerKW : profil de la puissance totale disponible sur la station de recharge en [kW] en fonction du temps. A chaque instant, la somme de toutes les puissances allouées pour chaque recharge ne pourra pas être supérieure à ce profil disponible ;
○ energeticalCostEur : profil du coût énergétique en [EUR/kW.h] en fonction du temps ;
○ CO2Emissions: profil des émissions CO2 équivalentes de l'électricité produite en [gCO2eq/kW.h] en fonction du temps.

Par la suite on utilisera des indices sur chacune de ces variables ; « i » identifie la borne sur laquelle on recharge un véhicule donné et « j » identifie la section temporelle que l'on considère suivant la discrétisation du temps qui sera faite.

Les noms de variable et les unités choisies sont donnés ici à titre d'illustration.

A partir de cette définition, la résolution du problème consiste à :
- Evaluer sa faisabilité ; cette phase consiste à vérifier s'il est possible de définir un ensemble de profils d'allocation de ressources permettant d'allouer les énergies demandées avec les contraintes définies (contraintes sur les profils, contraintes de ressource disponible, contraintes temporelles).
- Définir les profils d'allocation allocationCurrentA optimum (allocation en courant [A], pour chaque i borne branchée à un véhicule à recharger, et pour chaque j section temporelle).

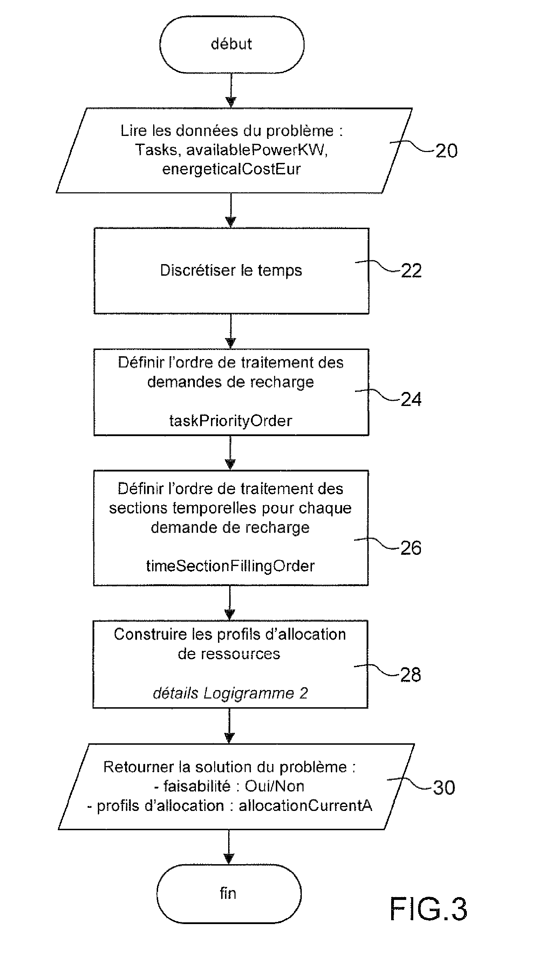

La figure 3 illustre les principales étapes du procédé selon l'invention dans le cas de l'exemple de réalisation de la figure 1.

Au cours de la phase d'analyse l'unité de gestion 4 reçoit (étape 20) les données du problème, c'est-à-dire, les objectifs d'optimisation définis (fin de recharge au plus tôt, début de recharge au plus tard, minimisation du coût, minimisation de l'empreinte CO2, les contraintes dont il faut tenir compte pour assurer ces objectifs, l'énergie totale disponible et son coût etc....

A l'étape 22, on définit le domaine temporel du problème, c'est-à-dire, la plage temporelle totale disponible pour réaliser une recharge des véhicules 8, et on découpe cette durée en sections équivalentes correspondant à des fenêtres temporelles unitaires dans lesquelles les contraintes sont identiques. Ainsi le découpage est fait de manière à limiter le nombre de section à traiter au juste nécessaire. Dans l'exemple de réalisation décrit, chaque section est définie par un instant de début, une durée, une puissance disponible, un prix du KWh consommé et les numéros (indices) des bornes susceptibles d'être sollicitées.

A l'étape 24, on définit une règle de priorité entre les différentes demandes de recharge.

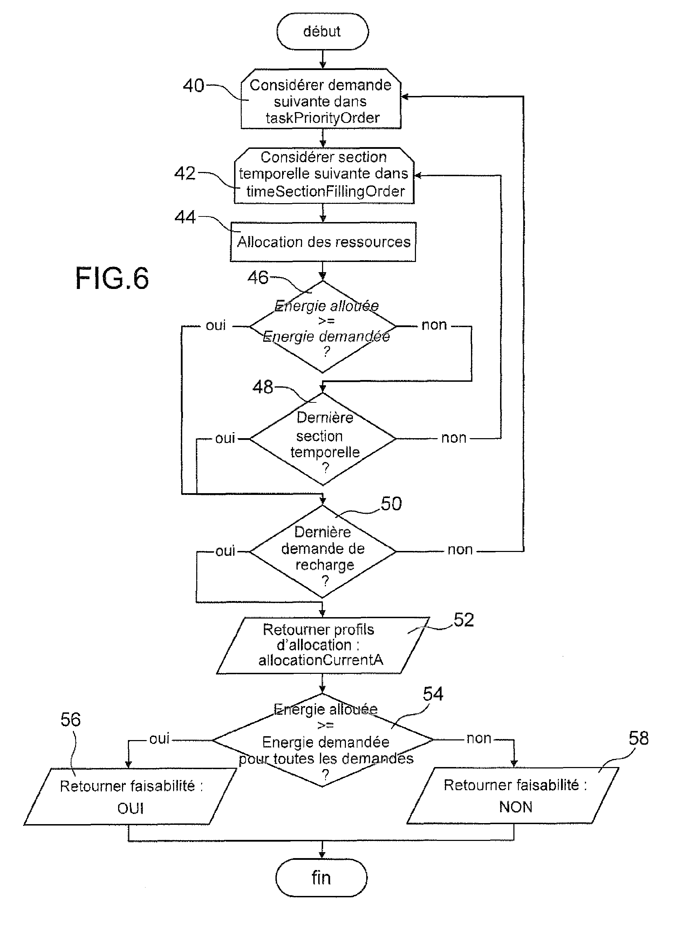

A l'étape 26, pour chaque demande de recharge, on définit l'ordre de traitement des sections temporelles définies, et à l'étape 28, on construit, pour chaque demande, un profil de recharge. Cette étape sera décrite en détail à la figure 6.

A l'étape 30, l'unité de gestion 4 délivre une décision de faisabilité ou de non faisabilité de la recharge optimisée.

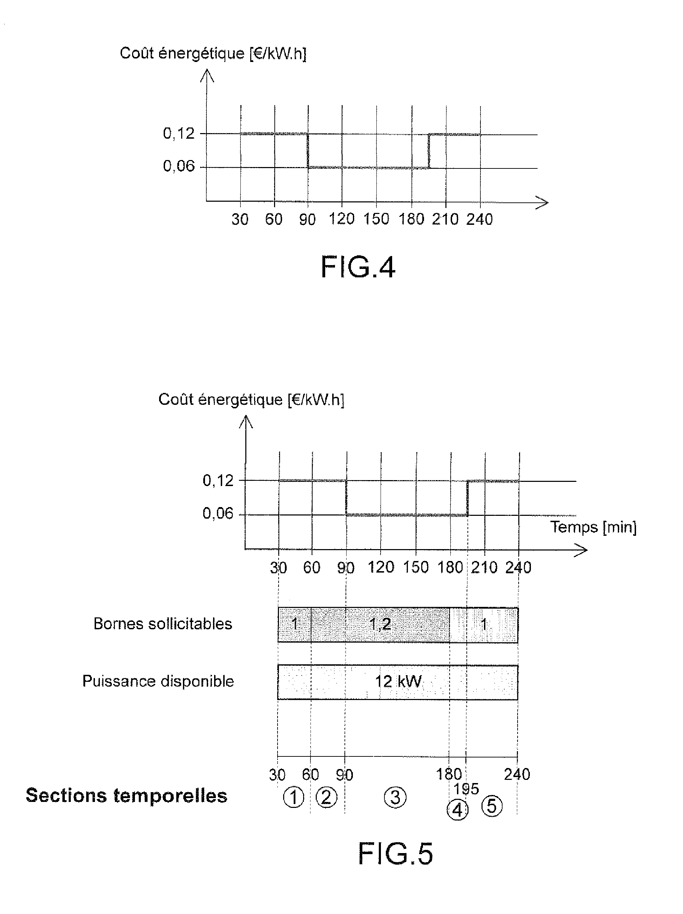

La figure 4 illustre schématiquement un exemple de variation du coût énergétique en fonction du temps pendant une période donnée.

Dans cet exemple on considère les conditions suivantes:
- horizon temporel H = [30,240] (unité en [min])
- demande de recharge sur la borne n°1, intervalle de disponibilité [30,240] ;
- demande de recharge sur la borne n°2, intervalle de disponibilité [60,180] ;
- puissance disponible constante sur H ;
- coût énergétique : donné par la courbe de la figure 4.

La discrétisation du domaine temporel aboutit à la figure 5 dans laquelle cinq sections temporelles ① à ⑤ sont définies.

Conformément à l'étape 24 de l'organigramme de la figure 3, on établit un ordre de priorité dans le traitement des demandes de recharge des différents véhicules. On peut définir un tel ordre de traitement sur plusieurs niveaux. A la sortie de cette étape, on obtient un vecteur appelé taskPriorityOrder avec les indices des demandes classés par ordre de priorité. A titre illustratif, on considère l'exemple suivant :
- Demande sur borne n°1 :
   ○ niveau de priorité = 1
   ○ startTimeMin = 10
   ○ endTimeMin = 180
- Demande sur borne n°2 :
   ○ niveau de priorité = 1
   ○ startTimeMin = 20
   ○ endTimeMin = 100
- Demande sur borne n°3:
   ○ niveau de priorité = 2
   ○ startTimeMin = 15
   ○ endTimeMin = 120
- Demande sur borne n°4 :
   ○ niveau de priorité = 2
   ○ startTimeMin = 10
   ○ endTimeMin = 120

Les règles de priorité sont définies comme suit :
○ 1^{er} niveau de classement : niveau de priorité par ordre croissant (les demandes avec niveau de priorité faible sont prioritaires),
○ 2^{ème} niveau de classement : endTimeMin par ordre croissant (les demandes devant se terminer plus tôt sont prioritaires),
○ 3^{ème} niveau de classement : startTimeMin par ordre décroissant (les demandes pouvant commencer plus tard sont prioritaires). Ces règles de classement retournent le vecteur taskPriorityOrder [2 ; 1 ; 3 ; 4].

L'étape 26 de l'organigramme de la figure 3, permet ensuite de définir, pour chaque demande de recharge, l'ordre de traitement des sections temporelles concernées. C'est cet ordre qui permet d'ajuster l'optimisation choisie :
■ Si par exemple on souhaite que la fin d'allocation de ressource se produise le plus tôt possible alors on traite les sections temporelles en commençant par celle qui démarre le plus tôt et par ordre chronologique.
■ Si on souhaite réaliser une allocation de ressources « just in time » (chaque affectation se finit le plus tard possible) alors on traite les sections temporelles en commençant par celle qui se finit le plus tard possible et en remontant par ordre anti-chronologique.
■ Si on veut minimiser le coût énergétique, alors on traite en priorité les sections pour lesquelles le coût énergétique est le plus faible : l'ordre de traitement est donc obtenu en classant les sections par ordre de croissant du coût énergétique.
■ Si on veut minimiser l'empreinte CO2, alors on traite en priorité les sections pour lesquelles l'indicateur d'émissions de CO2 équivalentes de l'énergie électrique produite est le plus faible : l'ordre de traitement est donc obtenu en classant les sections par ordre de croissant de cet indicateur.

D'autres optimisations sont possibles en affectant des coefficients spécifiques à chaque section temporelle et en faisant un classement croissant ou décroissant sur ces coefficients. Cette méthode permet d'assurer un objectif d'optimisation global (en utilisant les mêmes règles pour toutes les demandes), ou de réaliser une optimisation spécifique à chaque demande.

A la sortie de cette étape, on récupère une matrice timeSectionFillingOrder, dans laquelle chaque colonne correspond à une demande, et on renseigne dans les lignes les indices des sections à traiter suivant l'ordre défini.

Ainsi, avec ces contraintes, en considérant la demande effectuée sur la borne n°1 si on veut que la fin d'allocation de ressource se fasse le plus tôt possible, on obtient le vecteur suivant :
timeSectionFillingOrder( :,1)= [1; 2; 3; 4; 5]

Si on veut réaliser une allocation de ressource « just in time », on obtient le vecteur suivant :
timeSectionFillingOrder(:,1) = [5; 4; 3; 2; 1],

Si on veut minimiser le coût énergétique, obtient le vecteur suivant :
timeSectionFillingOrder( :,1) = [3; 4 ;1 ;2 ;5] Pour des sections avec le même coût énergétique, le classement se fait par numéro d'indice section temporelle croissant.

La figure 6 illustre en détail les opérations de l'étape 26 de construction de profils d'allocation de ressources.

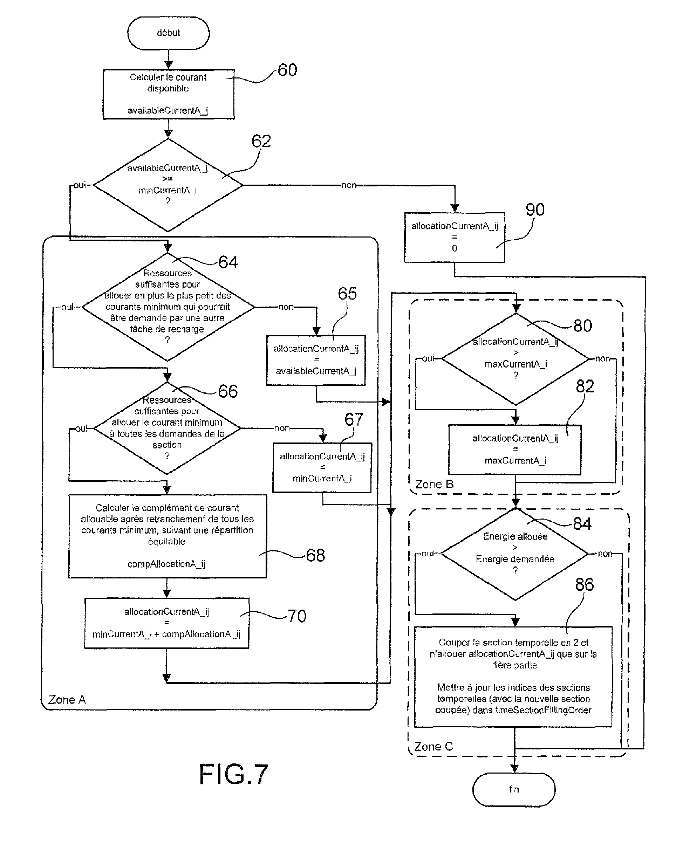

A l'étape 40, après le traitement d'une demande à un instant donnée, on considère la demande suivante dans le vecteur taskPriorityOrder, puis la section temporelle suivante dans le vecteur timeSectionFillingOrder, et on alloue la ressource selon la procédure qui sera décrite en détail par référence à la figure 7.

A l'étape 46, on vérifie si l'énergie allouée est supérieure à l'énergie demandée.

Si l'énergie allouée est inférieure à l'énergie demandée on vérifie (étape 48) si la section temporelle en cours de traitement est la dernière. Dans le cas où cette section n'est pas la dernière, la procédure se poursuit à partir de l'étape 42. Par contre, si cette section est la dernière, on vérifie (étape 50) si la demande en cours de traitement est la dernière.

Si la demande en cours de traitement n'est pas la dernière la procédure se poursuit à partir de l'étape 40.

Si la demande en cours de traitement est la dernière, l'unité de gestion 4 génère (étape 52) les profils d'allocation allocationCurrentA pour chaque demande.

Si à l'étape 46, il s'avère que l'énergie allouée est supérieure ou égale à l'énergie demandée, la procédure se poursuit à partir de l'étape 50.

A l'étape 54, l'unité de gestion 4 vérifie si l'énergie allouée est supérieure ou égale à l'énergie demandée pour l'ensemble des véhicules.

Si oui, l'unité de gestion génère (étape 56) une décision positive sur la faisabilité d'une recharge optimisée selon les profils d'allocation définis.

Si non, l'unité de gestion 4 génère (étape 58) une décision négative sur la faisabilité d'une recharge optimisée selon les profils d'allocation définis.

La figure 7 illustre en détail les opérations de l'étape 44 de la figure 6 pour réaliser l'allocation d'énergie au cours de chaque section temporelle.

Les demandes sont traitées l'une après l'autre suivant l'ordre défini dans taskPriorityOrder. Puis pour chaque demande, l'allocation des ressources se fait sur chaque section, tant que l'énergie demandée n'est pas complètement allouée, suivant l'ordre défini dans timeSectionFillingOrder.

L'organigramme de la figure 7 comporte trois zones fonctionnelles principales.

Une zone A dans laquelle on tient compte des demandes de la ressource qui pourraient être faites par les tâches de recharge qui n'ont pas encore été traitées. La logique ici est d'essayer de garder si possible des ressources en réserve pour ces futures demandes. S'il s'avère que les ressources disponibles ne sont pas suffisantes pour satisfaire les demandes (minimales) futures, on alloue tout ce qui est disponible à la tâche en cours de traitement.

Une zone B dans laquelle on limite le courant alloué suivant la contrainte maxCurrentA de la tâche traitée.

Et une zone C dans laquelle, avec le courant alloué sur la section temporelle traitée, on vérifie si l'énergie totale allouée à la tâche est supérieure à celle demandée au départ. Si c'est le cas, on garde la valeur de courant alloué et on réduit la section temporelle au juste nécessaire.

Notons qu'à titre alternatif, une autre façon de traiter la situation serait de garder la section temporelle intacte et de réduire le courant alloué au juste nécessaire.

Ainsi, à l'étape 60, pour une section temporelle donnée j, l'unité de gestion 4 calcule le courant disponible availableCurrentA_j au cours de cette section temporelle.

A l'étape 62, le courant disponible availableCurrentA_j est comparé à minCurrentA_i représentant la valeur minimale du courant qu'il est nécessaire d'allouer pour que le véhicule puisse se charger sur la borne i. Cette valeur correspond à un seuil de déclenchement du chargeur.

Si availableCurrentA_j est supérieur à minCurrentA_i, les étapes de la zone A sont exécutées.

Si availableCurrentA_j est inférieur à minCurrentA_i, le courant alloué allocationCurrentA_ij prend une valeur nulle (étape 90) et le processus d'allocation pour la borne i sur la section temporelle j se termine.

Dans la zone A, à l'étape 64, l'unité de gestion 4 vérifie si les ressources sont suffisantes pour allouer, en plus, le plus petit des courants minimum qui pourrait être demandé par une autre tâche de recharge.

Si non, à l'étape 65, le courant disponible availableCurrentA_j est totalement alloué via la borne i.

Si oui, à l'étape 66, l'unité de gestion 4 vérifie si les ressources sont suffisantes pour allouer le courant minimum à toutes les demandes de la section temporelle j.

Si non, à l'étape 67, l'unité de gestion 4 alloue le courant minCurrentA_i via la borne i.

Si oui, l'unité de gestion 4 calcule (étape 68) compAllocationA_ij représentant le complément de courant allouable après retranchement de tous les courants minimum, suivant une répartition équitable, et alloue (étape 70) le courant minCurrentA_i+compAllocationA_ij.

La procédure d'allocation de ressource se poursuit par les étapes de la zone B et C.

L'étape 80, le courant alloué allocationCurrentA_ij est comparé à maxCurrentA_i représentant la valeur maximale sous laquelle on peut charger le véhicule via la borne à cette valeur peut correspondre par exemple à la limite de la borne de recharge i, du câble de recharge ou du chargeur du véhicule.

Si allocationCurrentA_ij est supérieur à maxCurrentA_i, alors le courant alloué est limité à maxCurrentA_i (étape 82).

Si allocationCurrentA_ij est inférieur ou égal à maxCurrentA_i, alors le procédé se poursuit par les étapes de la zone C.

A l'étape 84, l'énergie allouée est comparée à l'énergie demandée.

Si l'énergie allouée est supérieure à l'énergie demandée, on garde (étape 86) la valeur de courant alloué calculée, mais on réduit la section temporelle au juste nécessaire. Cela entraîne donc une séparation de cette section en deux parties et une nouvelle discrétisation du domaine temporel. Cela met fin au processus d'allocation pour la borne i.

Si l'énergie allouée est inférieure ou égale à l'énergie disponible l'allocation de ressource pour la borne i sur la section temporelle j se termine.

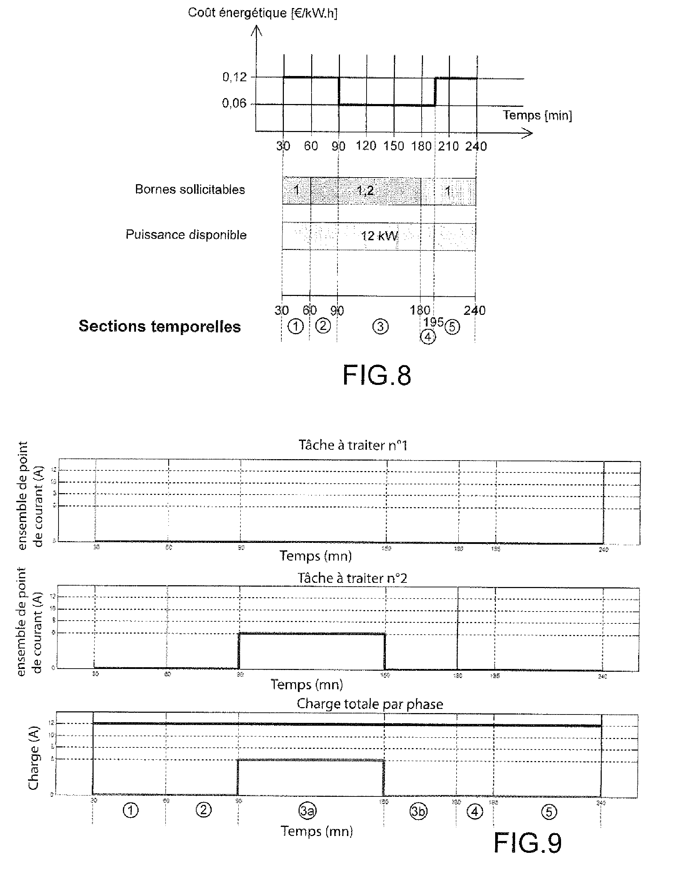

La procédure décrite par les figures 6 et 7 sera illustrée dans l'exemple de mise en oeuvre illustré par les figures 8 à 11.

On considère les demandes suivantes sur les bornes n°1 et n°2 :
- Borne n°1 :
   ○ energyToAllocateKWh_1 : 14,4 kW.h
   ○ startTimeMin_1 : 30 min
   ○ endTimeMin_1 : 240 min
   ○ minCurrentA_1 : 6 A
   ○ maxCurrentA_1 : 32 A
- Borne n°2 :
   ○ energyToAllocateKWh_1 : 4,32 kW.h
   ○ startTimeMin_1 : 60 min
   ○ endTimeMin_1 : 180 min
   ○ minCurrentA_1 : 6 A
   ○ maxCurrentA_1 : 32 A

Les recharges s'effectuent en triphasé et la tension phase-neutre sur toute la station est constante PNVoltage = 240 V.

La puissance disponible sur la station est constante sur tout le domaine temporel considéré availablePowerKW = 8,64 kW (cela correspond un courant de 12A triphasé).

On reprend le même coût énergétique déjà présenté dans les exemples (figure 4).

On se retrouve donc avec la même discrétisation temporelle que précédemment.

La figure 8 représente le résultat de cette discrétisation temporelle.

Pour l'ordre de traitement des tâches on applique les règles suivantes :
- 1^{er} niveau de classement : endTimeMin par ordre croissant (les demandes devant se terminer plus tôt sont prioritaires)
- 2^{ème} niveau de classement : startTimeMin par ordre décroissant (les demandes pouvant commencer plus tard sont prioritaires)
- 3^{ème} niveau de classement : pas de 3^{ème} niveau
On obtient donc taskPriorityOrder = [2; 1].

La stratégie à appliquer sera de minimiser le coût énergétique. On obtient donc l'ordre de traitement des sections temporelles suivant :
- demande n°1 : timeSectionFillingOrder( :,1) = [3; 4; 1; 2; 5]
- demande n°2 : timeSectionFillingOrder( :,2) = [3; 2]

L'organigramme de construction des profils de la figure 6 s'applique alors avec les contraintes ci-dessus.

La première tâche à traiter est la n°2 et on commence par la section temporelle 3 : on commence par la procédure d'allocation décrite par la figure 7.
- Aucune allocation n'a encore été réalisée, on a donc availableCurrentA_3 = 12 A.
- Ce courant disponible est supérieur à minCurrentA_2 = 6 A, on passe donc dans la Zone A. La seule autre demande susceptible d'être traitée dans la section temporelle 3 est la demande n°1, pour laquelle minCurrentA_1 = 6 A. Le courant disponible est donc suffisant pour réaliser l'allocation minimale pour toutes les tâches de la section ; par contre il ne reste plus de ressource disponible sur la section après cette allocation : on calcule donc compAllocationA_23 = 0 A, et on obtient :
   allocationCurrentA_2,3 = minCurrentA_2 + compAllocationA_2,3 = 6 A.
- allocationCurrentA_2,3 est inférieur à maxCurrentA_2, on passe donc la Zone B sans modification.
- On entre alors dans la Zone C. La durée de la section temporelle 3 est de 90 min. L'énergie allouée avec allocationCurrentA_2,3 = 6 A sur toute cette période serait donc de :
   6A * 240V * 3 * 90min = 388800 W.min = 6,48 kW.h .

Cette énergie est supérieure à la quantité demandée qui est de 4,32 kW.h. On réduit donc cette section temporelle au juste nécessaire, c'est-à-dire avec une durée de 60 min (6A * 240V * 3 * 60min = 259200 W.min = 4,32kW.h). On insère une nouvelle section temporelle commençant à 150 min et ayant une durée de 30 min.

Les profils d'allocation sont alors au niveau décrit sur la figure 9.

La deuxième tâche à traiter est la n°1 et on commence par la section temporelle 3. Cette même section vient d'être séparée en deux : on identifie la première partie commençant à 90 min et ayant une durée de 60 min par l'indice 3a, la deuxième partie commençant à 150 min et ayant une durée de 30 min par l'indice 3b.

On applique la procédure d'allocation décrite par la figure 7 pour la borne n°1 sur la section temporelle 3a. A l'issue de cette étape l'énergie allouée reste inférieure à l'énergie demandée, et il reste encore des sections temporelles à adresser pour la demande n°1. Conformément aux étapes 46 et 48 décrite par la figure 6, on continue la procédure d'allocation sur la section temporelle 3b.

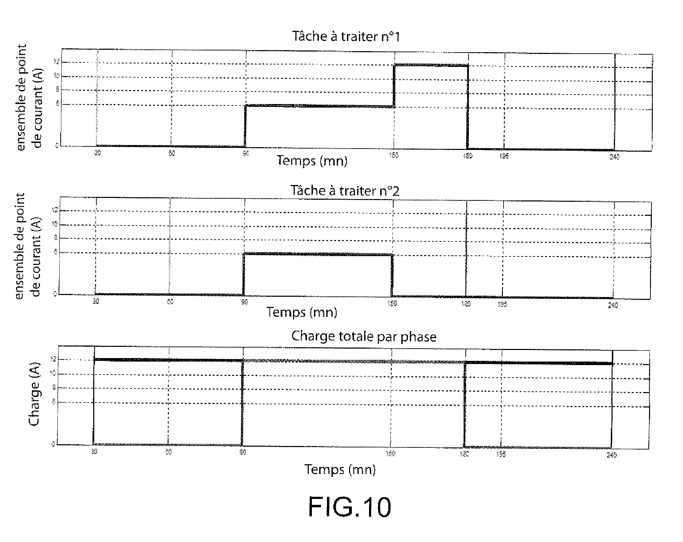

A l'issue de cette étape, l'allocation totale d'énergie pour la demande n°1 n'est pas encore terminée. Les profils d'allocation à cet instant intermédiaire sont décrits sur la figure 10.

On continue de déployer la procédure décrite par les figures 6 et 7 pour le reste des sections temporelles à considérer pour la demande n°1.

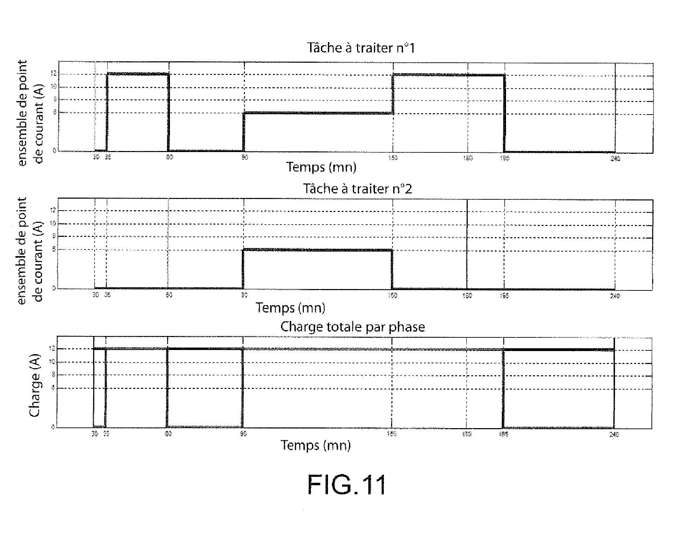

Les profils d'allocation finaux sont décrits sur la figure 11.

## Revendications

1. Procédé d'optimisation de la distribution d'une ressource à une pluralité d'entités réceptrices (8) de ladite ressource pendant une période de distribution donnée comportant une étape préalable consistant à évaluer la ressource totale disponible et les demandes de ladite ressource pendant la période de distribution donnée, procédé **caractérisé en ce qu'il** comporte en outre les étapes suivantes :
- découper (22) la période de distribution en plusieurs sections équivalentes correspondant à des fenêtres temporelles unitaires au cours desquelles il existe des contraintes identiques pour optimiser la distribution de ladite ressource,
- analyser la disponibilité de la ressource, les variations du niveau de cette ressource, la demande globale de la ressource, et la variation de cette demande pendant chaque fenêtre temporelle;
- définir (24) un ordre de priorité entre les demandes,
- définir (26) un ordre de priorité entre les fenêtres temporelles,
- construire (28) un profil de distribution en fonction de la variation du niveau de la ressource disponible au cours de ladite période de distribution,
- autoriser (30) la distribution de la ressource disponible selon l'ordre de priorité défini si le profil de distribution défini permet de satisfaire toutes les demandes.

2. Procédé selon la revendication 1 dans lequel lesdites fenêtres temporelles sont définies en fonction du niveau courant de la ressource disponible et d'au moins un paramètre décrivant les besoins de chaque entité réceptrice (8).

3. Procédé selon la revendication 1 **caractérisé en ce qu'il** comporte en outre une étape consistant à modifier l'ordre de priorité entre les fenêtres temporelles et/ou le niveau de la ressource distribuée si le profil de distribution défini ne permet pas de satisfaire la demande.

4. Procédé selon la revendication 3 dans lequel la ressource distribuée est de l'énergie électrique et en ce que l'entité réceptrice (8) est au moins un véhicule électrique.

5. Procédé selon la revendication 3 dans lequel la ressource distribuée est une bande de fréquence et en ce que l'entité réceptrice (8) est constituée par au moins un émetteur radiofréquence.

6. Procédé selon la revendication 3 dans lequel la ressource distribuée est une capacité de calcul et en ce que l'entité réceptrice (8) est constituée par au moins un microprocesseur.

7. Application du procédé selon la revendication 4 à 4 pour réaliser la recharge d'une pluralité de véhicules électriques et/ou hybride (8) au moyen d'une pluralité de stations de recharge (6) pendant une période de distribution donnée.

8. Application selon la revendication 7 dans laquelle l'objectif d'optimisation fixé consiste à choisir une durée optimale de recharge pour chacun desdits véhicules et/ou un coût minimal de l'énergie distribuée à chaque véhicule et/ou un niveau minimal d'émission de Gaz Carbonique produit par l'énergie électrique distribuée.

9. Application selon la revendication 8 dans laquelle, la demande de chaque véhicule (8) est définie par les paramètres suivants :
○ energyToAllocateKWh représentant l'énergie à allouer en [kW.h] ;
○ startTimeMin, représentant l'instant en [min] à partir duquel la charge est possible,
○ endTimeMin, représentant l'instant en [min] après lequel la charge n'est plus possible ;
○ minCurrentA, représentant la valeur minimale du courant en [A] qu'il est nécessaire d'allouer pour que le véhicule puisse se charger;
○ maxCurrentA, représentant la valeur maximale du courant en [A] sous laquelle on peut charger un véhicule (8),
et en ce que la puissance électrique disponible et les données d'optimisation sont définis par les paramètres suivants :
○ availablePowerKW, représentant le profil de la puissance totale disponible sur une station de recharge (6) en [kW] en fonction du temps ;
○ energeticalCost, représentant le profil du coût énergétique en fonction du temps ;
○ CO2Emissions, représentant le profil de l'indicateur d'émissions de CO2 équivalentes de l'énergie électrique produite en [gCO2eq / kW.h] en fonction du temps.

10. Dispositif d'optimisation de la distribution d'une ressource à une pluralité d'entités réceptrices (8) de ladite ressource pendant une période de distribution donnée, comportant:
- des moyens pour évaluer la ressource totale disponible et les demandes de ladite ressource pendant la période de distribution donnée, dispositif **caractérisé en ce qu'il** comporte en outre :
- des moyens pour découper (22) la période de distribution en plusieurs sections équivalentes correspondant à des fenêtres temporelles unitaires au cours desquelles il existe des contraintes identiques pour optimiser la distribution de ladite ressource,
- des moyens pour analyser la disponibilité de la ressource, les variations du niveau de cette ressource, la demande globale de la ressource, et la variation de cette demande pendant chaque fenêtre temporelle;
- des moyens pour définir un ordre de priorité entre les demandes,
- des moyens pour définir un ordre de priorité entre les fenêtres temporelles de manière à satisfaire l'objectif d'optimisation fixé,
- des moyens pour construire un profil de distribution de la ressource en fonction de la variation du niveau de ladite ressource au cours de la période de distribution fixée,
- des moyens pour autoriser l'allocation de la ressource disponible selon l'ordre de priorité défini seulement si le profil de distribution défini permet de satisfaire toutes les demandes.

11. Dispositif selon la revendication 10 comportant en outre des moyens pour modifier l'ordre de priorité entre les fenêtres temporelles et/ou le niveau d'énergie distribué pendant chaque fenêtre temporelle si le profil de distribution défini ne permet pas de satisfaire la demande de ladite entité.

12. Dispositif selon la revendication 11 dans lequel la ressource distribuée est une énergie électrique et en ce que l'entité réceptrice (8) est constituée par au moins une batterie rechargeable d'au moins un véhicule électrique.

13. Dispositif selon la revendication 10 dans lequel la ressource distribuée est une bande de fréquence et en ce que l'entité réceptrice (8) est constituée par au moins un émetteur radiofréquence.

14. Dispositif selon la revendication 10 dans lequel la ressource distribuée est une capacité de calcul et en ce que l'entité réceptrice (8) est constituée par au moins un microprocesseur.

15. Dispositif selon l'une des revendications 9 à 11 dans lequel lesdites stations de recharge (6) sont commandées par une unité centrale (4) de gestion reliée à une source d'énergie électrique.

16. Programme d'ordinateur enregistré sur un support d'enregistrement et comportant des instructions pour mettre en oeuvre les étapes du procédé selon l'une des revendications 1 à 8 lorsqu'il est exécuté sur un ordinateur.
